# EUROPEAN PATENT APPLICATION

(11) **EP 4 734 445 A1**
(43) Date of publication of application: **29.04.2026**
(21) Application number: 25188334.4
(22) Date of filing: 09.07.2025
(51) Int. Cl.: H04L 9/40, G06F 21/60

(54) **HOST SECURITY POLICY CONFIGURATION METHOD, APPARATUS, ELECTRONIC DEVICE, AND COMPUTER-READABLE MEDIUM**

(30) Priority: 22.10.2024 CN 202411482501
(71) Applicant: Beijing Volcano Engine Technology Co., Ltd., Beijing 100190 (CN)
(72) Inventor: ZHAO, Ziheng, Beijing, 100028 (CN)
(74) Representative: Grünecker Patent- und Rechtsanwälte PartG mbB

(57) **Abstract**

The present disclosure relates to a host security policy configuration method, an apparatus, an electronic device, and a computer-readable medium. The method includes: displaying a host management page in response to a trigger operation on the host management page, where the host management page displays a multi-level grouping for grouping management on hosts; and in response to a delete operation for a first grouping in the multi-level grouping, moving at least one first host comprised in the first grouping into a preset grouping at an equal level, changing a security policy corresponding to the at least one first host to a security policy corresponding to the preset grouping, and deleting the first grouping, where the preset grouping is used for recording an ungrouped host.

## Description

### CROSS-REFERENCE TO RELATED APPLICATION

The present application claims priority to Chinese Patent Application No. 202411482501.8, filed on October 22, 2024, which is incorporated herein by reference in its entirety as a part of the present application.

### TECHNICAL FIELD

The present disclosure relates to a host security policy configuration method, an apparatus, an electronic device, and a computer-readable medium.

### BACKGROUND

A host security product is a product that protects host security by installing a security agent, and the security agent needs to receive a security policy delivered by a console so as to effectively protect the host. Since a user's hosts are usually related to the user's business architecture and are frequently adjusted, a grouping of hosts that require an equal security policy need to be managed through grouping.

In the related art, a security policy of a host is usually configured based on level-1 grouping or based on static multi-level grouping. The former is not applicable to a scenario with a large number of hosts, while the latter is not applicable to a scenario where the hosts are frequently adjusted, and thus the security policy of the host cannot be conveniently configured.

### SUMMARY

The Summary is provided to introduce concepts in a simplified form that are described in detail below in the Detailed Description section. The Summary is not intended to identify key features or essential features of the claimed technical solution, nor is it intended to be used to limit the scope of the claimed technical solution.

The present disclosure provides a host security policy configuration method, including:
displaying a host management page in response to a trigger operation on the host management page, where the host management page displays a multi-level grouping for grouping management on hosts; and
in response to a delete operation for a first grouping in the multi-level grouping, moving at least one first host included in the first grouping into a preset grouping at an equal level, changing a security policy corresponding to the at least one first host to a security policy corresponding to the preset grouping, and deleting the first grouping, where the preset grouping is used for recording an ungrouped host.

The present disclosure provides a host security policy configuration apparatus, including:
a display module, configured to display a host management page in response to a trigger operation on the host management page, where the host management page displays a multi-level grouping for grouping management on hosts; and
a delete module, configured to, in response to a delete operation for a first grouping in the multi-level grouping, move at least one first host included in the first grouping into a preset grouping at an equal level, change a security policy corresponding to the at least one first host to a security policy corresponding to the preset grouping, and delete the first grouping, where the preset grouping is used for recording an ungrouped host.

The present disclosure provides a computer-readable medium having a computer program stored thereon, where the computer program, when executed by a processor, performs the method as described above.

The present disclosure provides an electronic device, including:
a memory having a computer program stored thereon; and
a processor, configured to execute the computer program in the memory to perform the steps of the method according to the first aspect.

The present disclosure provides a computer program product, including a computer program, where the computer program, when executed by a processor, performs the steps of the method as described above.

Other features and advantages of the present disclosure are described in detail in the subsequent detailed description section.

### BRIEF DESCRIPTION OF DRAWINGS

The above and other features, advantages, and aspects of embodiments of the present disclosure become more apparent when taken in conjunction with the drawings and with reference to the following detailed description. Throughout the drawings, the same or similar reference numerals refer to the same or similar elements. It should be understood that the drawings are schematic and that parts and elements are not necessarily drawn to scale. In the drawings:
FIG. 1 is a flowchart of a host security policy configuration method according to an exemplary embodiment of the present disclosure;
FIG. 2 is a schematic diagram of a host management page according to an exemplary embodiment of the present disclosure;
FIG. 3 is a schematic diagram of a sub-grouping creation page according to an exemplary embodiment of the present disclosure;
FIG. 4 is a schematic diagram of a process of moving a host according to an exemplary embodiment of the present disclosure;
FIG. 5 is a schematic diagram of an installation configuration page according to an exemplary embodiment of the present disclosure;
FIG. 6 is a schematic diagram of a policy configuration page according to an exemplary embodiment of the present disclosure;
FIG. 7 is a schematic diagram of display of an effective range according to an exemplary embodiment of the present disclosure;
FIG. 8 is a block diagram of a host security policy configuration apparatus according to an exemplary embodiment of the present disclosure; and
FIG. 9 is a schematic diagram of a structure of an electronic device according to an exemplary embodiment of the present disclosure.

### DETAILED DESCRIPTION

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. On the contrary, these embodiments are provided for a more thorough and complete understanding of the present disclosure. It should be understood that the drawings and embodiments of the present disclosure are only for illustrative purposes and are not intended to limit the protection scope of the present disclosure.

It should be understood that the various steps described in the method implementations of the present disclosure may be performed in different orders and/or in parallel. Furthermore, the method implementations may include additional steps and/or omit to perform the illustrated steps. The scope of the present disclosure is not limited in this respect.

The term "include/comprise" and its variants as used herein are open-ended inclusions, that is, "include/comprise but not limited to". The term "based on" means "based at least in part on". The term "one embodiment" means "at least one embodiment", the term "another embodiment" means "at least one additional embodiment", and the term "some embodiments" means "at least some embodiments". Relevant definitions of other terms will be given in the following description.

It should be noted that concepts such as "first" and "second" mentioned in the present disclosure are only used to distinguish between different apparatuses, modules or units, and are not used to limit the order or interdependence of functions performed by these apparatuses, modules or units.

It should be noted that the modifications of "one" and "a plurality of" mentioned in the present disclosure are illustrative and not restrictive, and those skilled in the art should understand that unless the context clearly indicates otherwise, they should be understood as "one or more".

The names of messages or information exchanged between multiple apparatuses in the implementations of the present disclosure are only used for illustrative purposes, and are not used to limit the scope of these messages or information.

It should be understood that before the technical solutions disclosed in the embodiments of the present disclosure are used, the user should be informed of the type, use scope, use scenario, etc. of the personal information involved in the present disclosure, and the user's authorization should be obtained, through an appropriate manner according to relevant laws and regulations.

For example, in response to receiving an active request from the user, prompt information is sent to the user to explicitly prompt the user that the operation requested to be performed will require the acquisition and use of the user's personal information. Thus, the user can independently select, according to the prompt information, whether to provide personal information to software or hardware such as an electronic device, an application, a server, or a storage medium that performs the operation of the technical solution of the present disclosure.

As an optional but non-limiting implementation, the manner of sending prompt information to the user in response to receiving the active request from the user may be, for example, a pop-up window, and the prompt information may be presented in the pop-up window in a text form. In addition, the pop-up window may carry a selection control for the user to select "agree" or "disagree" to provide personal information to the electronic device.

It should be understood that the preceding process of notifying and obtaining the user's authorization is only illustrative, and does not constitute a limitation on implementations of the present disclosure. Other manners that satisfy relevant laws and regulations may also be applied to the implementations of the present disclosure.

At the same time, it should be understood that the data involved in the technical solution (including but not limited to the data itself, and the acquisition or use of the data) should comply with requirements of corresponding laws, regulations, and relevant provisions.

In the related art, a security policy of a host is usually managed based on level-1 grouping, but this is not applicable to a scenario with a large number of hosts. Alternatively, the security policy of the host is managed based on static multi-level grouping, but since the user's hosts are often adjusted with the business architecture, for example, when a grouping needs to be deleted, when the grouping includes a host, the grouping needs to be emptied before the grouping can be deleted, resulting in high operation complexity and inconvenient configuration of the security policy of the host.

In view of this, the present disclosure provides a host security policy configuration method and apparatus, an electronic device, and a program product, to solve the preceding technical problems.

Embodiments of the present disclosure will be further explained below with reference to the drawings.

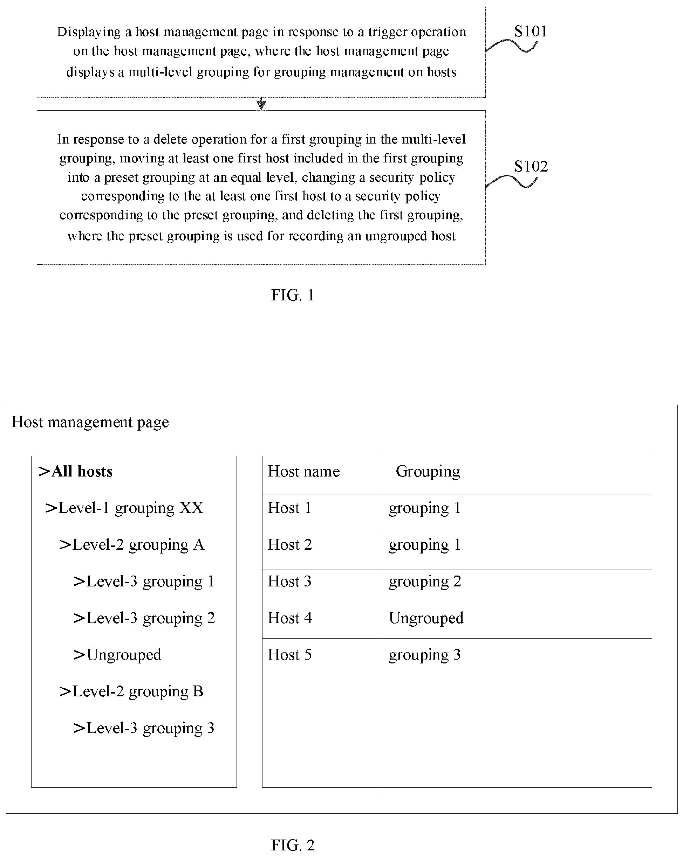

FIG. 1 is a flowchart of a host security policy configuration method according to an exemplary embodiment of the present disclosure. Referring to FIG. 1, the method may include the following steps.

S101: displaying a host management page in response to a trigger operation on the host management page, where the host management page displays a multi-level grouping for grouping management on hosts.

The host may be a physical device such as a server or a computer, or a virtual device such as a container or a virtual machine, which is not limited in the present disclosure.

In a possible manner, the multi-level grouping is a multi-level tree structure, where only sub-grouping corresponding to a leaf node in the multi-level tree structure is used for recording hosts, and a number of hosts in a parent grouping corresponding to a parent node in the multi-level tree structure is a sum of a number of hosts comprised in sub-groupings corresponding to all leaf nodes under the parent node.

Exemplarily, as shown in FIG. 2, the host management page displays the multi-level grouping, and the multi-level grouping may be a multi-level tree structure, which may be a level-3 grouping, a level-4 grouping, or the like, and may be set according to requirements, which is not limited in the present disclosure. By triggering the multi-level grouping, the hosts mounted on the corresponding grouping can be displayed on the host management page, and all hosts are displayed in FIG. 2. All groups can be clicked, filtered, and viewed. When the selected grouping has sub-groupings, the hosts mounted on the sub-groupings can also be filtered and viewed together, which is not limited in the present disclosure.

It should be noted that assuming that a parent grouping is mounted with a host, and a sub-grouping of the parent grouping is mounted with a host, setting a security policy for the host mounted on the parent grouping will affect the host mounted under the sub-grouping of the parent grouping. Therefore, in order to implement the grouping management of the security policies of the hosts, it may be set that the parent grouping corresponding to the parent node cannot be mounted with the host, but the grouping corresponding to the leaf node without the sub-grouping is mounted with the host, which may be set according to requirements, and the present disclosure does not limit this.

Exemplarily, the number of hosts mounted on each grouping may also be displayed in the multi-level grouping, and the number of hosts included in the parent grouping corresponding to the parent node is equal to the total number of hosts mounted on the sub-groupings corresponding to all leaf nodes under the parent grouping.

S102: in response to a delete operation for a first grouping in the multi-level grouping, moving at least one first host included in the first grouping into a preset grouping at an equal level, changing a security policy corresponding to the at least one first host to a security policy corresponding to the preset grouping, and deleting the first grouping, where the preset grouping is used for recording an ungrouped host.

Exemplarily, as shown in FIG. 2, assuming that grouping 1 includes host 1 and host 2, when grouping 1 is deleted, host 1 and host 2 are moved into the preset grouping at the equal level as grouping 1, that is, the "ungrouped" sub-grouping under level-2 grouping A, and the security policy of host 1 and host 2 moved into the "ungrouped" sub-grouping is changed from the original security policy to the security policy configured for the "ungrouped" sub-grouping. It should be noted that when the "ungrouped" sub-grouping is not configured with a security policy, host 1 and host 2 are also changed to have no security policy. Thus, the multi-level grouping can be flexibly adjusted according to requirements, for example, the grouping can be deleted when the grouping is mounted with the host.

In a possible manner, moving the at least one first host included in the first grouping into the preset grouping at the equal level includes: when a second grouping at the equal level to the first grouping exists, moving the at least one first host included in the first grouping into the preset grouping at the equal level, where the second grouping does not include the preset grouping. The method further includes: when the second grouping does not exist, moving the at least one first host into a parent grouping of the first grouping, changing a security policy of the at least one first host to a security policy corresponding to the parent grouping, and deleting the first grouping.

Exemplarily, still referring to FIG. 2, assuming that only one level-3 grouping 1 under level-2 grouping A exists, in this case, level-3 grouping 1 is deleted, and host 1 and host 2 can be directly mounted under level-2 grouping A, that is, level-2 grouping A changes from a parent grouping to a leaf grouping. Correspondingly, when there are only level-3 grouping 1 and the "ungrouped" sub-grouping under level-2 grouping A, the "ungrouped" sub-grouping can also be synchronously deleted, and the host in the "ungrouped" sub-grouping, host 1 and host 2 are mounted under level-2 grouping A together.

That is, all "ungrouped" sub-groupings cannot exist in isolation, and need to coexist with other sub-groupings at the equal level. This is because when the parent grouping becomes a leaf grouping, convenient host grouping management can also be implemented, so that it is not necessary to create or retain the "ungrouped" sub-grouping, thereby avoiding redundant sub-groupings in the multi-level grouping.

In a possible manner, the method further includes: deleting the preset grouping in response to a remove operation for all hosts included in the preset grouping.

Exemplarily, after all hosts in the "ungrouped" sub-grouping are removed, that is, the "ungrouped" sub-grouping is an empty grouping, the "ungrouped" sub-grouping may be deleted, which may be set according to requirements, and the present disclosure does not limit this. Thus, redundant sub-groupings in the multi-level grouping can be avoided.

In a possible manner, moving the at least one first host included in the first grouping into the preset grouping at the equal level includes: when the preset grouping at an equal level to the first grouping does not exist, creating the preset grouping, and moving the at least one first host included in the first grouping into the preset grouping.

Exemplarily, still referring to FIG. 2, assuming that there is no "ungrouped" sub-grouping at the equal level to level-3 grouping 1 under level-2 grouping A, the "ungrouped" sub-grouping can be created first, and then host 1 and host 2 are mounted into the "ungrouped" sub-grouping. Thus, the "ungrouped" sub-grouping can be automatically created, dynamic management of the multi-level grouping can be implemented, the operation complexity of the user is reduced, and the adjustment efficiency of the multi-level grouping is improved.

That is, it may be set that the preset grouping is controlled by the system, and the user cannot perform operations such as editing, deleting, and creating sub-groupings for the grouping, which may be set according to requirements, and the present disclosure does not limit this.

By adopting the preceding method, the host management page displays the multi-level grouping for the grouping management of the hosts, so that the multi-level grouping management of the security policies of the hosts can be implemented, and the ungrouped hosts can be managed through the preset grouping, so that the multi-level grouping can be flexibly adjusted according to requirements, and the security policies of the hosts can be configured more conveniently to protect the security of the hosts.

In a possible manner, the method further includes: displaying a sub-grouping creation page in response to a sub-grouping creation operation for a fourth grouping in the multi-level grouping, where the sub-grouping creation page is used for creating a sub-grouping; determining, in response to an edit operation on the sub-grouping creation page, a sub-grouping name corresponding to the edit operation; generating a target sub-grouping corresponding to the sub-grouping name when the fourth grouping does not comprise other sub-grouping having the equal sub-grouping name; and prompting that a sub-grouping having the equal name when the fourth grouping comprises another sub-grouping having the equal sub-grouping name.

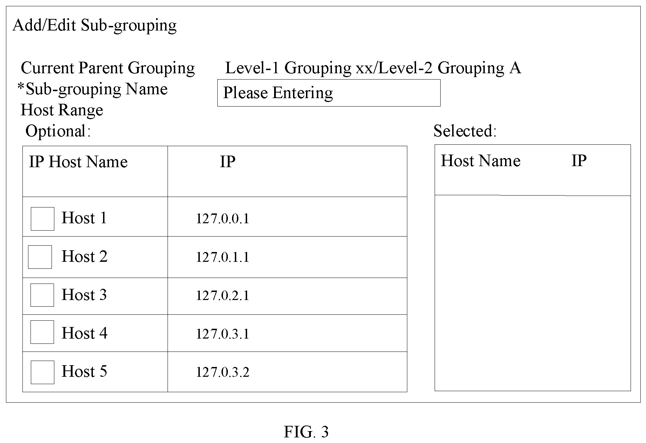

Exemplarily, still referring to FIG. 2, a control for creating a sub-grouping may be provided on the host management page, or the control for creating a sub-grouping may be displayed in a control pop-up window triggered by right-clicking or hovering the mouse in the multi-level grouping, which is not limited in the present disclosure. Assuming that a sub-grouping is created for level-2 grouping A, the sub-grouping creation page shown in FIG. 3 is displayed.

Exemplarily, the sub-grouping creation page may display a path of a current parent grouping, an input box for a sub-grouping name to be created, an optional range of hosts for the created sub-grouping, a selected range of hosts, and the like, where the optional range of hosts may display all hosts, and when the selected host has another grouping, it may be prompted that the host has another grouping, and the host is moved into the currently created grouping after the user confirms, and the host in the other grouping is deleted.

Exemplarily, a duplicate name judgment may also be performed, that is, sub-grouping names under the equal parent grouping cannot be repeated, and sub-grouping names under different parent groupings may be repeated, that is, complete paths of the groups cannot be repeated. When the sub-grouping name is repeated, prompt information may be displayed to prompt the user that the current grouping has a sub-grouping having the equal name. nowhen the sub-grouping having the equal name does not exist, the sub-grouping is successfully created. Thus, the grouping can be flexibly created according to requirements, and the multi-level grouping management of the hosts can be implemented.

It should be noted that an empty sub-grouping may also be created, that is, the host range may not be selected. In addition, an edit operation may also be performed for an existing grouping, for example, "sub-grouping name", "host range", etc. may be edited, which is not limited in the present disclosure.

In a possible manner, the method further includes: after generating the target sub-grouping corresponding to the sub-grouping name, when the fourth grouping does not comprise other sub-grouping and the fourth grouping includes at least one third host, creating a preset grouping at the equal level to the target sub-grouping under the fourth grouping, and moving the at least one third host into the preset grouping at the equal level to the target sub-grouping.

Exemplarily, still referring to FIG. 2, level-3 grouping 1 is originally a leaf grouping in the multi-level grouping, and includes host 1 and host 2. Assuming that a level-4 grouping Y is created under level-3 grouping 1, level-3 grouping 1 changes from a leaf grouping to a parent grouping. Since the parent grouping cannot be mounted with the host, host 1 and host 2 can be moved into the preset grouping under level-3 grouping 1, that is, the preset grouping at the equal level to the created level-4 grouping Y. nowhen the preset grouping under level-3 grouping 1 does not exist, a preset grouping, for example, a sub-grouping named "ungrouped", can be automatically created, and host 1 and host 2 are automatically moved into the "ungrouped" sub-grouping, so as to perform grouping management for the host originally mounted on the parent grouping.

In a possible manner, the method further includes: displaying a single option list corresponding to the multi-level grouping in response to a move operation for a second host in a third grouping in the multi-level grouping, where a single option in the single option list corresponds to a grouping without a sub-grouping in the multi-level grouping; and moving the second host into a grouping corresponding to a target single option in response to a selection operation for the target single option in the single option list.

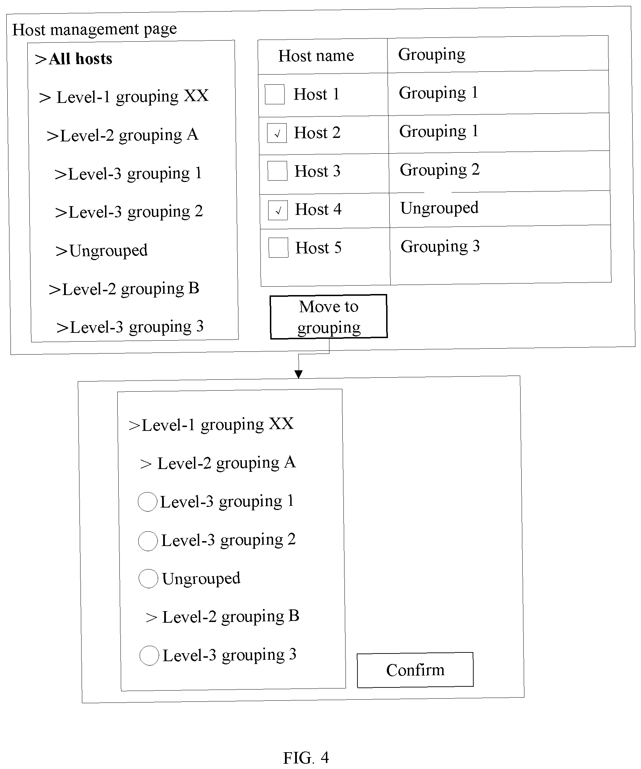

Exemplarily, as shown in FIG. 4, one or more hosts may be selected to perform the move operation, and the multiple hosts may be hosts in the equal grouping or in different groups, which is not limited in the present disclosure. Then the single option list corresponding to the multi-level grouping is displayed, which may be displayed in the form of a pop-up window, which is not limited in the present disclosure. It should be noted that in order to avoid moving the host into the parent grouping, the selection control may not be displayed in front of the parent grouping, which may be set according to requirements, and the present disclosure does not limit this.

It should be understood that when the moved host is already in another grouping, a corresponding prompt may be given, and the host is moved to a new grouping after the user confirms.

In a possible manner, the at least one first host included in the first grouping is configured as follows: displaying an installation configuration page in response to an installation configuration operation for the first host, where the installation configuration page is used for grouping configuration on hosts; determining, in response to a grouping configuration operation for the first host on the installation configuration page, a target grouping path corresponding to the grouping configuration operation; and moving the first host into the first grouping when a grouping in the target grouping path represents the first grouping.

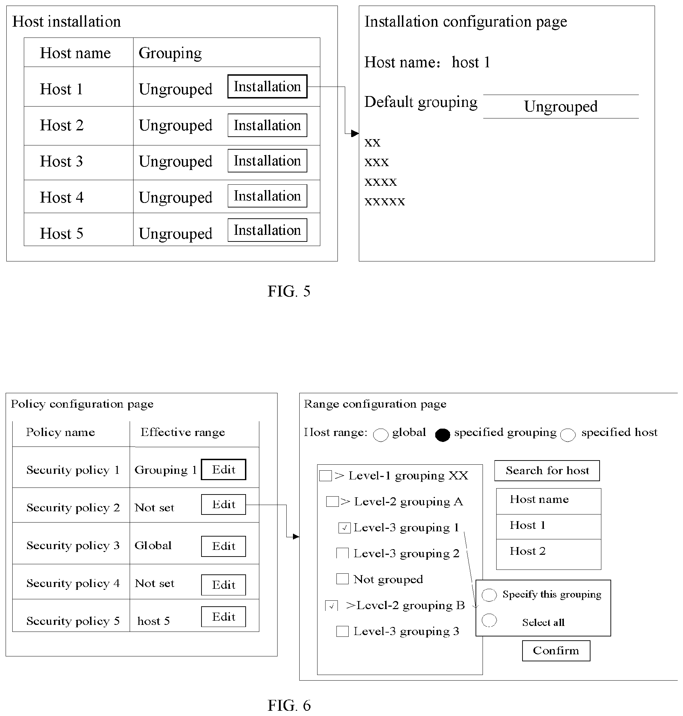

Exemplarily, the grouping configuration can be performed for the host on the installation configuration page, as shown in FIG. 5. Assuming that grouping 1 is selected, host 1 is mounted into grouping 1. Each host can be set when the host is installed, or can be set when the host grouping is modified subsequently, which is not limited in the present disclosure. In addition, a default grouping can also be set, that is, the host is mounted into the default grouping by default when the host is installed, so that each host does not need to be set when the host is installed, thereby simplifying the operation of the user and improving the host installation efficiency.

In a possible manner, the method further includes: when the grouping represented by the target grouping path does not exist, searching for a target parent grouping that exists in the target grouping path, and moving the at least one first host into the target parent grouping or a preset grouping at a lower level of the target parent grouping.

Exemplarily, when the set grouping does not exist, or originally exists but is subsequently deleted, taking a set grouping path of "level-1 grouping/level-2 group/level-3 group" as an example, when the level-3 grouping does not exist, the level-2 grouping is searched, and when the level-2 grouping exists, whether the level-2 grouping has a sub-grouping is judged, and when the level-2 grouping has a sub-grouping, the host is mounted into the "ungrouped" sub-grouping under the level-2 grouping, and when the level-2 grouping does not have a sub-grouping, the host is directly mounted into the level-2 grouping. By analogy, when the level-2 grouping does not exist, the level-1 grouping is further searched upward, which will not be repeated in the present disclosure.

In a possible manner, the security policy corresponding to the at least one first host included in the first grouping is configured as follows: displaying a policy configuration page in response to a trigger operation on the policy configuration page, where the policy configuration page displays all security policies that are configured; displaying a range configuration page in response to a range configuration operation for a target security policy in the all security policies, where the range configuration page is used for configuring an effective range of the target security policy; and determining the target security policy as the security policy corresponding to the at least one first host included in the first grouping in response to a range selection operation for the first grouping.

Exemplarily, as shown in FIG. 6, the policy configuration page displays the all security policies, and when the range configuration is performed for one of the security policies, the corresponding range configuration page is displayed, and the first grouping can be selected as the effective range of the security policy. Correspondingly, the security policy of the first grouping is configured as the security policy.

It should be noted that the global scope may be specified as the effective range of the security policy, that is, the security policy is effective for all hosts, a grouping may also be specified as the effective range of the security policy, and a host may also be specified as the effective range of the security policy. when a range conflict in the security policy of the host, for example, grouping 1 is configured with security policy 1, and host 1 in grouping 1 is configured with security policy 2, other hosts in grouping 1 except host 1 use security policy 1, and host 1 uses security policy 2. This may be set according to requirements, which is not limited in the present disclosure.

In a possible manner, the effective range includes a specified grouping range for configuring a security policy for a host in a specified group. Determining the target security policy as the security policy corresponding to the at least one first host included in the first grouping in response to the selection operation for the first grouping includes: displaying multiple-level options in a one-to-one correspondence with the multi-level grouping in response to the selection operation for the specified grouping range; and determining the target security policy as the security policy corresponding to the at least one first host included in the first grouping in response to the selection operation for a target option corresponding to the first grouping in the multiple-level options.

Exemplarily, as shown in FIG. 6, after the specified grouping range is selected, the multiple-level options corresponding to the multi-level grouping are displayed, and one or more groups may be selected. Thus, the effective range may be set for the security policy, and correspondingly, the security policy of the selected grouping is configured as the security policy. Similarly, after the specified host range is selected, multiple options in a one-to-one correspondence with all hosts are displayed, and one or more hosts may be selected.

Exemplarily, the first grouping may be selected as the effective range of the security policy, and correspondingly, the security policy of the first grouping is configured as the security policy.

Exemplarily, after the grouping is selected, the hosts mounted on the grouping may be displayed on the page, and the search function may be provided, which is not limited in the present disclosure.

In a possible manner, determining the target security policy as the security policy corresponding to the at least one first host included in the first grouping in response to the selection operation for the target option corresponding to the first grouping in the multiple-level options includes: displaying a first effective option and a second effective option in response to the selection operation for the target option corresponding to the first grouping in the multiple-level options, where the first effective option is used for controlling the target security policy to be effective for the host currently included in the first grouping, and the second effective option is used for controlling the target security policy to be effective for the host currently included in the first grouping and a host subsequently added to the first grouping; determining the target security policy as the security policy corresponding to the at least one first host currently included in the first grouping in response to a selection operation for the first effective option; and determining the target security policy as the security policy corresponding to the at least one first host currently included in the first grouping and the host subsequently added to the first grouping in response to a selection operation for the second effective option.

Exemplarily, as shown in FIG. 6, after the grouping is selected, the first effective option "all" and the second effective option "specified grouping" are displayed. Selecting "all" indicates that the security policy is effective for the host currently included in the grouping, that is, applied to all hosts currently mounted on the grouping or hosts currently mounted on all sub-groupings of the grouping. Selecting "specified grouping" indicates that the security policy is effective for the host currently included in the grouping and the host subsequently added to the grouping, that is, applied to all hosts currently mounted on the grouping and hosts subsequently mounted on the grouping or hosts currently mounted on all sub-groupings of the grouping and hosts subsequently mounted on the sub-groupings. The effective range of the security policy is flexibly controlled by providing two effective manners.

In a possible manner, the effective range includes the specified grouping range for configuring a security policy for a host in a specified grouping, a global scope for configuring the security policy for all hosts, and a specified host range for configuring the security policy for a specified host. The method further includes: displaying an effective range corresponding to each security policy on the policy configuration page in at least one of the following manners: displaying a global scope identification for a first security policy having the global scope; displaying a first interactive control for a second security policy having a single specified grouping range, where the first interactive control is used for displaying, when triggered, a host included in the grouping corresponding to the single specified grouping range; displaying a second interactive control for a third security policy having multiple specified grouping ranges, where the second interactive control is used for displaying, when triggered, hosts included in the groups corresponding to the multiple specified grouping ranges; displaying a third interactive control for a fourth security policy having a single specified host range, where the third interactive control is used for displaying, when triggered, a single host corresponding to the single specified host range; and displaying a fourth interactive control for a fifth security policy having multiple specified host ranges, where the fourth interactive control is used for displaying, when triggered, multiple hosts corresponding to the multiple specified host ranges.

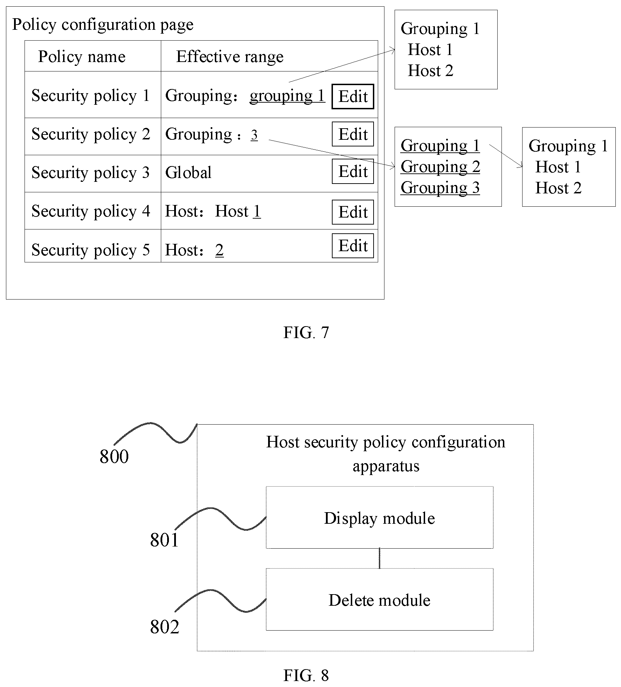

Exemplarily, the effective range of the security policy may display different contents according to different types. As shown in FIG. 7, the global scope displays a text identification, such as "global", which is not clickable. The single specified grouping range displays a grouping identification and a grouping name, and provides the interactive control, for example, the grouping name is clickable to display a list of hosts mounted on the grouping. The multiple specified grouping ranges display grouping identifications and the number of groups, and provide interactive controls, for example, the number of groups is clickable to display a list of multiple groups, and a single grouping is further clicked to display a list of hosts mounted on the grouping. The number of hosts mounted on each grouping may be displayed on the grouping list, and then the number is clicked to display the list of hosts mounted on the grouping, which may be set according to requirements, and the present disclosure does not limit this.

Exemplarily, the page interaction of the single specified host range and the multiple specified host ranges may be referred to the page interaction of the single specified grouping range and the multiple specified grouping ranges, respectively, which will not be repeated in the present disclosure. Thus, different display effects of different effective ranges can be achieved, and the page is more intuitive and the operation is more convenient.

In a possible manner, the method further includes: displaying all hosts included in a fifth grouping in response to a trigger operation for the fifth grouping in the multi-level grouping; and determining, in response to a search operation for the host in the fifth grouping, a search condition corresponding to the search operation, and switching to display a host satisfying the search condition in the fifth grouping.

Exemplarily, the host management page, the policy configuration page, and other pages provided by the present disclosure may be pages of a host security management system, and different pages may be accessed by clicking different menus, and the different pages may provide page search functions. Taking the host management page as an example, the grouping search condition item may be displayed on the page, that is, the user may select grouping 1 and configure other search conditions, and the page displays the hosts in grouping 1 that satisfy the other search conditions.

Exemplarily, other pages of the host security management system, such as a security vulnerability page for displaying a list of security vulnerabilities, when a certain vulnerability affects host 1 mounted on grouping 1 and host 2 mounted on grouping 2, host 1 mounted on grouping 1 will be displayed after grouping 1 is selected, and so on, which will not be repeated in the present disclosure. Thus, the display and search functions of the dynamic multi-level grouping can be provided, which is convenient for the user to perform grouping management.

It should be noted that when searching, it is necessary to search based on the current latest grouping situation, so as to avoid the situation where the search result is inconsistent with the actual situation.

Based on the equal concept, an embodiment of the present disclosure provides a host security policy configuration apparatus. As shown in FIG. 8, the host security policy configuration apparatus 800 includes:
a display module 801 is configured to display a host management page in response to a trigger operation on the host management page, where the host management page displays a multi-level grouping for grouping management on hosts; and
a delete module 802 is configured to, in response to a delete operation for the first grouping in the multi-level grouping, move at least one first host included in a first grouping into a preset grouping at an equal level, change a security policy corresponding to the at least one first host to a security policy corresponding to the preset grouping, and delete the first grouping, where the preset grouping is used for recording an ungrouped host.

Optionally, the delete module 802 is configured to:
when a second grouping at an equal level to the first grouping exists, move the at least one first host included in the first grouping into the preset grouping at the equal level, where the second grouping does not include the preset grouping; and
the host security policy configuration apparatus 800 further includes:
   a first delete sub-module, configured to move the at least one first host into a parent grouping of the first grouping, change a security policy of the at least one first host to a security policy corresponding to the parent grouping, and delete the first grouping, when the second grouping does not exist.

Optionally, the delete module 802 is configured to:
when the preset grouping at an equal level to the first grouping does not exist, create the preset grouping, and move the at least one first host included in the first grouping into the preset grouping.

Optionally, the host security policy configuration apparatus 800 further includes:
a second delete sub-module, configured to delete the preset grouping in response to a remove operation for all hosts included in the preset grouping.

Optionally, the security policy corresponding to the at least one first host included in the first grouping is configured through the following modules:
a first response module, configured to display a policy configuration page in response to a trigger operation on the policy configuration page, where the policy configuration page displays all security policies that are configured;
a second response module, configured to display a range configuration page in response to a range configuration operation for a target security policy in the all security policies, where the range configuration page is used for configuring an effective range of the target security policy; and
a third response module, configured to determine the target security policy as the security policy corresponding to the at least one first host included in the first grouping in response to a range selection operation for the first grouping.

Optionally, the effective range includes a specified grouping range for configuring a security policy for a host in a specified grouping; and
the third response module is configured to:
display multiple-level options in a one-to-one correspondence with the multi-level grouping in response to a selection operation for the specified grouping range; and
determine the target security policy as the security policy corresponding to the at least one first host included in the first grouping in response to a selection operation for a target option corresponding to the first grouping in the multiple-level options.

Optionally, the third response module is configured to:
display a first effective option and a second effective option in response to the selection operation for the target option corresponding to the first grouping in the multiple-level options, where the first effective option is used for controlling the target security policy to be effective for the host currently included in the first grouping, and the second effective option is used for controlling the target security policy to be effective for the host currently included in the first grouping and a host subsequently added to the first grouping;
determine the target security policy as the security policy corresponding to the at least one first host currently included in the first grouping in response to a selection operation for the first effective option; and
determine the target security policy as the security policy corresponding to the at least one first host currently included in the first grouping and the host subsequently added to the first grouping in response to a selection operation for the second effective option.

Optionally, the effective range includes the specified grouping range for configuring a security policy for a host in a specified grouping, a global scope for configuring the security policy for all hosts, and a specified host range for configuring the security policy for a specified host, and the host security policy configuration apparatus 800 further includes a display sub-module, where the display sub-module is configured to:
display an effective range corresponding to each security policy on the policy configuration page in at least one of the following manners:
display a global scope identification for a first security policy having the global scope;
display a first interactive control for a second security policy having a single specified grouping range, where the first interactive control is used for displaying, when triggered, a host included in the grouping corresponding to the single specified grouping range;
display a second interactive control for a third security policy having multiple specified grouping ranges, where the second interactive control is used for displaying, when triggered, hosts included in the groups corresponding to the multiple specified grouping ranges;
display a third interactive control for a fourth security policy having a single specified host range, where the third interactive control is used for displaying, when triggered, a single host corresponding to the single specified host range; and
display a fourth interactive control for a fifth security policy having multiple specified host ranges, where the fourth interactive control is used for displaying, when triggered, multiple hosts corresponding to the multiple specified host ranges.

Optionally, the at least one first host included in the first grouping is configured through the following modules:
a fourth response module, configured to display an installation configuration page in response to an installation configuration operation for the first host, where the installation configuration page is used for grouping configuration on hosts;
a fifth response module, configured to determine, in response to a grouping configuration operation for the first host on the installation configuration page, a target grouping path corresponding to the grouping configuration operation; and
a move-in module, configured to move the first host into the first grouping when a grouping in the target grouping path represents the first grouping.

Optionally, the host security policy configuration apparatus 800 further includes:
a search module, configured to search for a target parent grouping that exists in the target grouping path, and move the at least one first host into the target parent grouping or a preset grouping at a lower level of the target parent grouping, when the grouping represented by the target grouping path does not exist.

Optionally, the host security policy configuration apparatus 800 further includes a move module, and the move module is configured to:
display a single option list corresponding to the multi-level grouping in response to a move operation for a second host in a third grouping in the multi-level grouping, where a single option in the single option list corresponds to a grouping without a sub-grouping in the multi-level grouping; and
move the second host into a grouping corresponding to a target single option in response to a selection operation for the target single option in the single option list.

Optionally, the host security policy configuration apparatus 800 further includes a sub-grouping creation module, and the sub-grouping creation module is configured to:
display a sub-grouping creation page in response to a sub-grouping creation operation for a fourth grouping in the multi-level grouping, where the sub-grouping creation page is used for creating a sub-grouping;
determine, in response to an edit operation on the sub-grouping creation page, a sub-grouping name corresponding to the edit operation;
generate a target sub-grouping corresponding to the sub-grouping name when the fourth grouping does not comprise other sub-grouping having the equal sub-grouping name; and
prompt that a sub-grouping having the equal name when the fourth grouping comprises another sub-grouping having the equal sub-grouping name.

Optionally, the host security policy configuration apparatus 800 further includes a preset grouping creation module, and the preset grouping creation module is configured to:
after generating the target sub-grouping corresponding to the sub-grouping name, when the fourth grouping does not comprise other sub-grouping and the fourth grouping includes at least one third host, create a preset grouping at the equal level to the target sub-grouping under the fourth grouping, and move the at least one third host into the preset grouping at the equal level to the target sub-grouping.

Optionally, the host security policy configuration apparatus 800 further includes a search module, and the search module is configured to:
display all hosts included in a fifth grouping in response to a trigger operation for the fifth grouping in the multi-level grouping; and
determine, in response to a search operation for the host in the fifth grouping a search condition corresponding to the search operation for a host in the fifth grouping, and switch to display a host satisfying the search condition in the fifth grouping.

Based on the equal concept, an embodiment of the present disclosure further provides a computer-readable medium having a computer program stored thereon, where the computer program, when executed by a processor, performs the steps of the host security policy configuration method described above.

Based on the equal concept, an embodiment of the present disclosure further provides an electronic device, including:
a memory having a computer program stored thereon; and
a processor, configured to execute the computer program in the memory to perform the steps of the host security policy configuration method described above.

Based on the equal concept, an embodiment of the present disclosure further provides a computer program product, including a computer program, where the computer program, when executed by a processor, performs the steps of the host security policy configuration method described above.

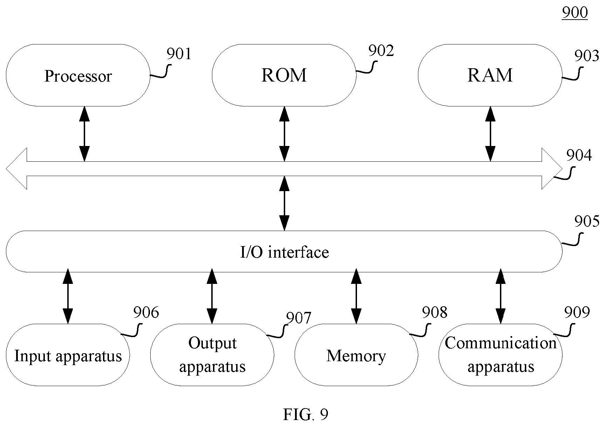

Reference is made to FIG. 9 below, which illustrates a schematic diagram of a structure of an electronic device 900 suitable for implementing an embodiment of the present disclosure. The terminal device in the embodiment of the present disclosure may include, but is not limited to, a mobile terminal such as a mobile phone, a laptop, a digital broadcast receiver, a PDA (Personal Digital Assistant), a PAD (Tablet Computer), a PMP (Portable Multimedia Player), a vehicle-mounted terminal (such as a vehicle navigation terminal), and a fixed terminal such as a digital TV and a desktop computer. The electronic device shown in FIG. 9 is only an example, and should not impose any limitations on the function and use scope of the embodiments of the present disclosure.

As shown in FIG. 9, the electronic device 900 may include a processor (such as a central processing unit and a graphics processor) 901 that can perform various appropriate actions and processing according to a program stored in a read-only memory (ROM) 902 or a program loaded from a memory 908 into a random access memory (RAM) 903. The RAM 903 also stores various programs and data required for the operation of the electronic device 900. The processor 901, the ROM 902, and the RAM 903 are connected to each other through a bus 904. An input/output (I/O) interface 905 is also connected to the bus 904.

Generally, the following apparatuses may be connected to the I/O interface 905: an input apparatus 906 including, for example, a touchscreen, a touchpad, a keyboard, a mouse, a camera, a microphone, an accelerometer, a gyroscope, etc.; an output apparatus 907 including, for example, a liquid crystal display (LCD), a speaker, a vibrator, etc.; a memory 908 including, for example, a magnetic tape, a hard disk, etc.; and a communication apparatus 909. The communication apparatus 909 may allow the electronic device 900 to perform wireless or wired communication with other devices to exchange data. Although FIG. 9 shows the electronic device 900 having various apparatuses, it should be understood that it is not required to implement or have all the illustrated apparatuses. Alternatively, more or fewer apparatuses may be implemented or provided.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, and the computer program includes program codes for executing the method shown in the flowchart. In such an embodiment, the computer program may be downloaded and installed from a network through the communication apparatus 909, or installed from the memory 908, or installed from the ROM 902. When the computer program is executed by the processor 901, the preceding functions defined in the method of the embodiment of the present disclosure are performed.

It should be noted that the preceding computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semiconductor system, apparatus or device, or any combination thereof. More specific examples of the computer-readable storage medium may include, but are not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer-readable storage medium may be any tangible medium including or storing a program, and the program may be used by or used in conjunction with an instruction execution system, apparatus, or device. In the present disclosure, the computer-readable signal medium may include a data signal propagated in a baseband or as a part of a carrier, and computer-readable program codes are carried in the data signal. The data signal propagated in this manner may be in various forms, including, but not limited to, an electromagnetic signal, an optical signal, or any suitable combination thereof. The computer-readable signal medium may also be any computer-readable medium other than the computer-readable storage medium. The computer-readable signal medium may send, propagate, or transmit a program used by or used in conjunction with an instruction execution system, apparatus, or device. The program codes included on the computer-readable medium may be transmitted by any suitable medium, including, but not limited to, a wire, an optical cable, RF (radio frequency), etc., or any suitable combination thereof.

In some implementations, communication may be performed using any currently known or future-developed network protocol such as HTTP (HyperText Transfer Protocol, hypertext transfer protocol), and may be interconnected with digital data communication (for example, a communication network) in any form or medium. Examples of the communication network include a local area network ("LAN"), a wide area network ("WAN"), an inter-network (for example, the Internet), and a peer-to-peer network (for example, an ad hoc network), as well as any currently known or future-developed network.

The preceding computer-readable medium may be included in the preceding electronic device, or may exist alone without being assembled into the electronic device.

The preceding computer-readable medium carries one or more programs, and when the one or more programs are executed by the electronic device, the electronic device is caused to: display a host management page in response to a trigger operation on the host management page, where the host management page displays a multi-level grouping for grouping management on hosts; and in response to a delete operation for a first grouping in the multi-level grouping, move at least one first host included in the first grouping into a preset grouping at an equal level, change a security policy corresponding to the at least one first host to a security policy corresponding to the preset grouping, and delete the first grouping, where the preset grouping is used for recording an ungrouped host.

The computer program codes for performing the operations of the present disclosure may be written in one or more programming languages or a combination thereof. The preceding programming languages include object-oriented programming languages such as Java, Smalltalk, and C++, as well as conventional procedural programming languages such as "C" language or similar programming languages. The program codes may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the drawings illustrate possible architectures, functions, and operations of the system, method, and computer program product according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the drawings. For example, two blocks shown in succession may, in fact, be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules involved in the embodiments of the present disclosure may be implemented in software or hardware. The name of the module does not constitute a limitation on the module itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD) and the like.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium may include an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

The preceding description is only preferred embodiments of the present disclosure and an illustration of the applied technical principles. Those skilled in the art should understand that the scope of disclosure involved in the present disclosure is not limited to the technical solutions formed by the specific combination of the preceding technical features, and should also cover other technical solutions formed by any combination of the preceding technical features or their equivalent features without departing from the preceding disclosed concept, for example, the technical solutions formed by replacing the preceding features with the technical features with similar functions disclosed in the present disclosure (but not limited to).

In addition, although operations are depicted in a particular order, this should not be understood as requiring these operations to be performed in the particular order shown or in a sequential order. Under certain circumstances, multitasking and parallel processing may be advantageous. Likewise, although the preceding discussion contains several specific implementation details, these should not be construed as limiting the scope of the present disclosure. Certain features that are described in the context of separate embodiments may also be implemented in combination in a single embodiment. On the contrary, various features described in the context of a single embodiment may also be implemented in multiple embodiments individually or in any suitable sub-combination.

Although the subject matter has been described in language specific to structural features and/or logical actions of the method, it should be understood that the subject matter defined in the appended claims is not necessarily limited to the specific features or actions described above. On the contrary, the specific features and actions described above are only exemplary forms for implementing the claims. Regarding the apparatuses in the preceding embodiments, the specific manner in which the respective modules perform operations has been described in detail in the embodiments related to the method, and will not be described in detail here.

## Claims

1. A host security policy configuration method, comprising:
Displaying (S101) a host management page in response to a trigger operation on the host management page, wherein the host management page displays a multi-level grouping for grouping management on hosts; and
in response to a delete operation for a first grouping in the multi-level grouping, moving (S102) at least one first host comprised in the first grouping into a preset grouping at an equal level, changing a security policy corresponding to the at least one first host to a security policy corresponding to the preset grouping, and deleting the first grouping, wherein the preset grouping is used for recording an ungrouped host.

2. The host security policy configuration method according to claim 1, wherein the moving at least one first host comprised in the first grouping into a preset grouping at an equal level comprises:
when a second grouping at an equal level to the first grouping exists, moving the at least one first host comprised in the first grouping into the preset grouping at an equal level, wherein the second grouping does not comprise the preset grouping; and
the method further comprises:
when the second grouping does not exist, moving the at least one first host into a parent grouping of the first grouping, changing a security policy of the at least one first host to a security policy corresponding to the parent grouping, and deleting the first grouping.

3. The host security policy configuration method according to claim 1 or 2, wherein the security policy corresponding to the at least one first host comprised in the first grouping is configured by:
displaying a policy configuration page in response to a trigger operation on the policy configuration page, wherein the policy configuration page displays all security policies that are configured;
displaying a range configuration page in response to a range configuration operation for a target security policy in the all security policies, wherein the range configuration page is used for configuring an effective range of the target security policy; and
determining the target security policy as the security policy corresponding to the at least one first host comprised in the first grouping in response to a range selection operation for the first grouping.

4. The host security policy configuration method according to claim 3, wherein the effective range comprises a specified grouping range for configuring a security policy for a host in a specified grouping; and
the determining the target security policy as the security policy corresponding to the at least one first host comprised in the first grouping in response to the selection operation for the first grouping comprises:
displaying multiple-level options in a one-to-one correspondence with the multi-level grouping in response to a selection operation for the specified grouping range; and
determining the target security policy as the security policy corresponding to the at least one first host comprised in the first grouping in response to a selection operation for a target option corresponding to the first grouping in the multiple-level options.

5. The host security policy configuration method according to claim 3, wherein the effective range comprises a specified grouping range for configuring a security policy for a host in a specified grouping, a global scope for configuring the security policy for all hosts, and a specified host range for configuring the security policy for a specified host, and the method further comprises:
displaying an effective range corresponding to each security policy on the policy configuration page in at least one of the following manners:
displaying a global scope identification for a first security policy having the global scope;
displaying a first interactive control for a second security policy having a single specified grouping range, wherein the first interactive control is used for displaying, when triggered, a host comprised in the grouping corresponding to the single specified grouping range;
displaying a second interactive control for a third security policy having multiple specified grouping ranges, wherein the second interactive control is used for displaying, when triggered, hosts comprised in the groups corresponding to the multiple specified grouping ranges;
displaying a third interactive control for a fourth security policy having a single specified host range, wherein the third interactive control is used for displaying, when triggered, a single host corresponding to the single specified host range; and
displaying a fourth interactive control for a fifth security policy having multiple specified host ranges, wherein the fourth interactive control is used for displaying, when triggered, multiple hosts corresponding to the multiple specified host ranges.

6. The host security policy configuration method according to claim 1 or 2, wherein the at least one first host comprised in the first grouping is configured by:
displaying an installation configuration page in response to an installation configuration operation for the first host, wherein the installation configuration page is used for grouping configuration on hosts;
determining, in response to a grouping configuration operation for the first host on the installation configuration page, a target grouping path corresponding to the grouping configuration operation; and
moving the first host into the first grouping when a grouping in the target grouping path represents the first grouping.

7. The host security policy configuration method according to claim 6, further comprising:
when the grouping represented by the target grouping path does not exist, searching for a target parent grouping that exists in the target grouping path, and moving the at least one first host into the target parent grouping or a preset grouping at a lower level of the target parent grouping.

8. The host security policy configuration method according to claim 1 or 2, wherein the method further comprises:
displaying a single option list corresponding to the multi-level grouping in response to a move operation for a second host in a third grouping in the multi-level grouping, wherein a single option in the single option list corresponds to a grouping without a sub-grouping in the multi-level grouping; and
moving the second host into a grouping corresponding to a target single option in response to a selection operation for the target single option in the single option list.

9. The host security policy configuration method according to claim 1 or 2, further comprising:
displaying a sub-grouping creation page in response to a sub-grouping creation operation for a fourth grouping in the multi-level grouping, wherein the sub-grouping creation page is used for creating a sub-grouping;
determining, in response to an edit operation on the sub-grouping creation page, a sub-grouping name corresponding to the edit operation;
generating a target sub-grouping corresponding to the sub-grouping name when the fourth grouping does not comprise other sub-grouping having an equal sub-grouping name; and
prompting that there is a sub-grouping having an equal name when the fourth grouping does not comprise another sub-grouping having the equal sub-grouping name.

10. The host security policy configuration method according to claim 9, further comprising:
after generating the target sub-grouping corresponding to the sub-grouping name, when the fourth grouping does not comprise no other sub-grouping and the fourth grouping comprises at least one third host, creating a preset grouping at the equal level to the target sub-grouping under the fourth grouping, and moving the at least one third host into the preset grouping at the equal level to the target sub-grouping.

11. The host security policy configuration method according to claim 1 or 2, further comprising:
displaying all hosts comprised in a fifth grouping in response to a trigger operation for the fifth grouping in the multi-level grouping; and
determining, in response to a search operation for the host in the fifth grouping, a search condition corresponding to the search operation, and switching to display a host satisfying the search condition in the fifth grouping.

12. A host security policy configuration apparatus, comprising:
a display module (801), configured to display a host management page in response to a trigger operation on the host management page, wherein the host management page displays a multi-level grouping for grouping management on hosts; and
a delete module (802), configured to move at least one first host included in a first grouping into a preset grouping at an equal level, change a security policy corresponding to the at least one first host to a security policy corresponding to the preset grouping, and delete the first grouping, in response to a delete operation for the first grouping in the multi-level grouping, wherein the preset grouping is used for recording an ungrouped host.

13. A non-transitory computer-readable medium having a computer program stored thereon, wherein the computer program, when executed by a processor, performs the host security policy configuration method according to any one of claims 1 to 11.

14. An electronic device, comprising:
a memory (908) having a computer program stored thereon; and
a processor (901), configured to execute the computer program in the memory to perform the host security policy configuration method according to any one of claims 1 to 11.

15. A computer program product, comprising a computer program, wherein the computer program, when executed by a processor, performs the host security policy configuration method according to any one of claims 1 to 11.
